# EUROPÄISCHE PATENTSCHRIFT

(11) **EP 2 483 054 B1**
(45) Veröffentlichungstag und Bekanntmachung des Hinweises auf die Patenterteilung: **28.08.2013**
(21) Anmeldenummer: 10787683.1
(22) Anmeldetag: 26.09.2010
(51) Int. Cl.: B29C 63/02, F16C 17/00

(54) **MONTAGEHILFE ZUM ANMONTIEREN VON FOLIEN SOWIE DAZUGEHÖRIGE HALTERUNGSEINRICHTUNG**
MOUNTING AID FOR MOUNTING FILMS AND ASSOCIATED FITTING ARRANGEMENT
DISPOSITIF D'ASSISTANCE À LA POSE PERMETTANT LA POSE DE FILMS ET APPAREILLAGE DE FIXATION ASSOCIE

(30) Priorität: 29.09.2009 DE 102009043361
(43) Veröffentlichungstag der Anmeldung: 08.08.2012
(73) Patentinhaber: CK-Tech GmbH & Co. KG, 48432 Rheine (DE)
(72) Erfinder: KIRGIZ, Tarik, 48431 Rheine (DE)
(74) Vertreter: Straube, Urs Norman
(86) Internationale Anmeldenummer: PCT/DE2010/075097
(87) Internationale Veröffentlichungsnummer: WO 2011/038733

(56) Entgegenhaltungen:
- US-A1- 2003 037 889

## Beschreibung

Die Erfindung betrifft eine Montagehilfe zum Anmontieren von Folien, insbesondere Werbefolien, häufig mit Schrift- oder Bildanteilen, nach dem Oberbegriff des Anspruchs 1.

Derartige Folien werden insbesondere in der Werbetechnik, im Messebau, bei der grafischen Gestaltung von Schaufenstern, Gebäudefassaden oder Kraftfahrzeugen verwendet. Die Folien finden vielfältige Anwendung und sind weit verbreitet. Sie sind in der Regel dreischichtig aufgebaut: Die unterste Schicht ist eine Trägerfolie. Auf der Trägerfolie liegt die eigentliche Folie, die selbstklebend ist und auf ein Substrat aufgebracht werden kann. Aus dieser selbstklebenden Folie werden im Rahmen der Vorbereitungsarbeiten mit einem Plotter bzw. Schneidegerät Abschnitte herausgeschnitten und entfernt, so dass im Ergebnis nur die gewünschten grafischen Elemente auf der Trägerfolie verbleiben. Die ausgeschnittene Folie ist nun in dem Zustand, in dem sie auf das zu gestaltende Substrat übertragen werden kann. Herkömmlicherweise erfolgt die Übertragung unter Zuhilfenahme von Applikationsfolie. Die Applikationsfolie ist in der Regel transparent und auf der Unterseite selbstklebend beschichtet. Die Applikationsfolie wird auf einem als Rolle ausgebildeten Kern geliefert und ist in verschiedenen Längen und Breiten und erhältlich. Das Format der Applikationsfolie wird so gewählt, dass die komplette Folienbahn von einem Stück Applikationsfolie abgedeckt werden kann. Üblicherweise ist die Arbeitsfläche horizontal ausgebildet, auf der Arbeitsfläche liegt die aus Trägerfolie und grafischen Elementen bestehende Folienbahn ausgebreitet, so dass die ausgeschnittenen grafischen Elemente nach oben hin gerichtet sind. Nun wird die Applikationsfolie von einer Seite der Arbeitsfläche so weit abgerollt, bis sie eine ausreichende Länge aufweist, um die komplette Foliebahn abzudecken. Erst dann beginnt man damit, die Applikationsfolie sukzessive mit der selbstklebenden Unterseite auf die darunter befindliche Folienbahn zu kleben, so dass auf diese Weise eine dreischichtige Folienbahn ohne Lufteinschlüsse hergestellt wird.

Zur Montage bringt man die dreischichtige Folienbahn auf dem zu beklebenden Substrat in die gewünschte Position und fixiert sie dort z.B. mit Klebestreifen. Als nächstes wird die Trägerfolie an der Unterseite der Klebefolie entfernt. Hierbei wird sukzessive ein Abschnitt der Trägerfolie von der selbstklebenden Folie abgezogen und der so freigelegte Abschnitt der selbstklebenden Folie auf das Substrat übertragen. Die Applikationsfolie gewährleistet während dieses Arbeitsschrittes, dass die zu übertragenden grafischen Elemente in der gewünschten Anordnung zueinander bestehen bleiben. Dann folgt der nächste Abschnitt und so fort, bis die Folie vollständig auf das Substrat geklebt ist. In einem letzten Arbeitsschritt wird die auf der nun angebrachten Folie noch befindliche Übertragungsfolie entfernt.

Die sich aus dem oben beschriebenen Verfahren ergebenden Nachteile sind im Folien verklebenden Gewerbe bekannt. Je nach Breite der zu verklebenden Folien werden für die Anbringung der Applikationsfolie während der Vorbereitungsarbeiten und für die Ausrichtung auf dem zu beklebenden Substrat, dem Entfernen der Trägerfolie und dem darauf folgenden Befestigen der selbstklebenden Folie mehrere Arbeitskräfte benötigt, um ein faltenfreies, flächiges Verkleben zu ermöglichen. Es ist also ein hoher Zeit- und Personalaufwand nötig. Dennoch ist es möglich, dass beim Verarbeiten der Folie ein Kontakt zwischen den verschiedenen Folien oder zwischen Folie und dem Substrat an ungewollter Stelle hergestellt wird oder die Folie falsch positioniert wird oder Falten wirft. Dadurch entstehen erhebliche zusätzliche Kosten, da die Folie wieder vom Substrat entfernt werden muss, in der Regel unbrauchbar ist und neu hergestellt und angebracht werden muss.

Aufgabe der Erfindung ist es deshalb, eine Montagehilfe bereitzustellen, die eine einfache und sichere Verarbeitung von Folien ermöglicht.

Die Erfindung löst diese Aufgabe durch eine Montagehilfe mit den Merkmalen des Anspruchs 1 und durch eine Halterungseinrichtung mit den Merkmalen des Anspruchs 15. Hinsichtlich vorteilhafter Ausgestaltungen wird auf die abhängigen Ansprüche 2 bis 14 verwiesen.

Mit der Erfindung ist eine Montagehilfe bereitgestellt, die die Anbringung von Folien auf flächigen Substraten, wie etwa Scheiben, erheblich erleichtert. Dadurch, dass die Montagehilfe zwei ortsfest abstützbare Halterungseinrichtungen zur Halterung des Kerns, von dem die Folie abzuwickeln ist, gegenüber dem Substrat umfasst, wobei der Kern gegenüber den Halterungseinrichtungen drehbar ist, kann der Kern mit der darauf aufgewickelten Folie eine beliebige Breite haben. Beide Halterungseinrichtungen können unabhängig voneinander mit dem Kern verbunden werden und so ein Höchstmaß an Flexibilität für die Länge des Kerns ermöglichen.

Durch die Abstützmöglichkeit beider Halterungseinrichtungen gegenüber dem Substrat kann die Folie ohne Unterstützung der montierenden Person(en) an dem Substrat gehalten werden.

Wenn die Halterungseinrichtungen jeweils einen axial und parallel zum Kern erstreckten Stützkörper umfassen, an denen der Kern drehbeweglich gegenüber dem Substrat gehalten ist, kann die Folie leicht über ihren Kern mit den beiden Stützkörpern verbunden und trotz der in Funktion ortsfest ausgerichteten Anordnung der Halterungseinrichtungen leicht abgewickelt werden.

Insbesondere ist der Kern üblicherweise als Papprolle in Form eines Hohlzylinders ausgebildet und kann mit seinen axialen Enden auf die axial erstreckten Stützkörper einfach aufgesteckt werden, wobei besonders vorteilhaft ein besonders fester Halt und ein Toleranzausgleich für den Innendurchmesser des Kerns erreicht sind, wenn die Stützkörper nach axial außen hin konisch erweitern. Dadurch kann der Kern genau so weit aufgeschoben werden, bis er festen Halt findet. Wenn dabei die Gesamtbreite aus Kern und seitlichen Halterungseinrichtungen variiert, ist dies aufgrund der Unabhängigkeit der beiden seitlichen Halterungseinrichtungen unbedeutend.

Insbesondere umfassen die Halterungseinrichtungen jeweils eine Ringhalterung, in denen die Stützkörper drehbar gehalten sind, so daß sie über ihren Umfang gleichmäßig und mechanisch stabil abgestützt sind. Dabei können die Stützkörper zum Aufwickeln des Kerns über von außen zugängliche Griffbereiche manuell drehbar sein.

Mit der Möglichkeit, den Kern gegenüber den Halterungseinrichtungen einerseits drehen zu können und andererseits diese Drehbewegung über eine Brems- oder Blockadevorrichtung hemmen zu können, ist nicht allein die Halterung der Folie an dem Substrat möglich, sondern auch deren partielles oder vollständiges Abrollen in der fest gehaltenen Stellung der Halterungseinrichtung.

Insbesondere können die Brems- oder Blockadevorrichtungen für eine Hemmung der Drehbewegung einstell- und nachstellbar sein, wodurch sowohl verschiedene Widerstände gegen das Abrollen - je nach Vorliebe des Bedieners und nach Größe der Folie - als auch eine Nachjustierung zum Ausgleich von Verschleiß ermöglicht sind.

Besonders günstig sind die Halterungseinrichtungen gleichartig und austauschbar ausgebildet, so dass von dem Bediener keine Überlegungen angestellt werden müssen, welche Halterungseinrichtung links und welche rechts an den Kern anzusetzen ist. Die Arbeit ist dadurch beschleunigt.

Die Halterungseinrichtungen können konstruktiv einfach jeweils nur zwei Kunststoffkörper umfassen, nämlich einen ersten, die Ringhalterung umfassenden, und einen zweiten, den drehbaren Stützkörper umfassenden. Dieser Stützkörper kann bei der Montage von axial außen in die Ringhalterung eingesteckt und gegen ein axiales Herausziehen gesichert werden, zum Beispiel durch eine Stufe auf dem axial einwärts weisenden Teil des Stützkörpers. Diese Stufe kann auch nach dem Durchstecken aufgeschweißt werden.

Jeder Halterungseinrichtung ist vorteilhaft zumindest ein Befestigungsmittel zur mittelbaren oder unmittelbaren Halterung an dem Substrat zugeordnet sind, zum Beispiel ein Saugnapf, so dass auch die Festlegung der beiden Halterungseinrichtungen nacheinander und völlig unabhängig voneinander erfolgen kann.

Dabei ist es sehr günstig, wenn jeder Halterungseinrichtung zumindest eine Ausrichtungshilfe zur exakten horizontalen und/oder vertikalen Ausrichtung gegenüber dem Substrat zugeordnet ist, zum Beispiel zwei oder mehr Wasserwaagen.

Eine Halterungseinrichtung für eine Montagehilfe nach einem der Ansprüche 1 bis 14 ist gesondert handelbar und daher hier auch einzeln beansprucht.

Weitere Vorteile und Merkmale der Erfindung ergeben sich aus einem in der Zeichnung dargestellten und nachfolgend beschriebenen Ausführungsbeispiel des Gegenstandes der Erfindung.

In der Zeichnung zeigt:
- Fig. 1: eine schematische, leicht perspektivische Ansicht einer erfindungsgemäßen Montagehilfe mit einem daran zwischen seitlichen Halterungseinrichtungen gehaltenen Kern als Träger einer Folie,

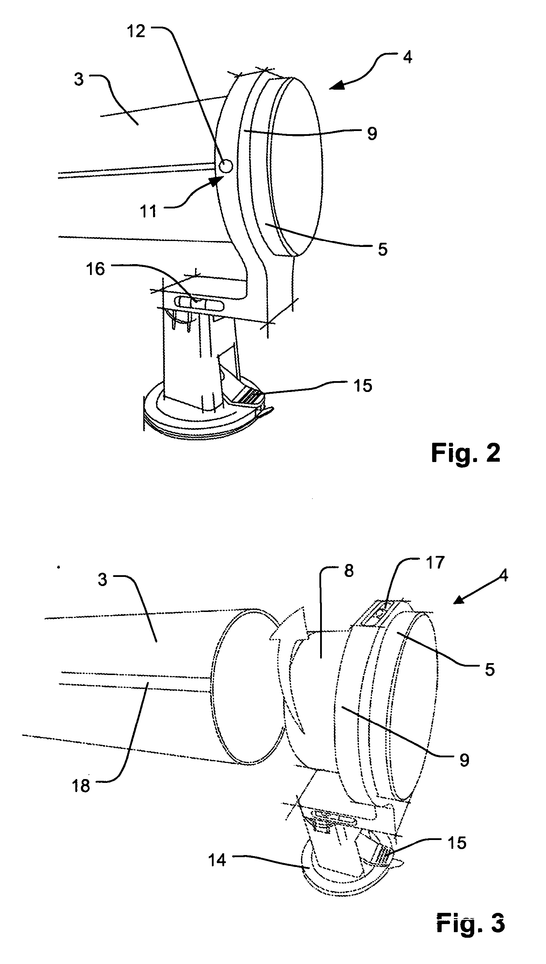

- Fig. 2: eine Detailansicht einer seitlichen Halterungseinrichtung mit daran gehaltenem Kern, etwa entsprechend dem Detail II in Fig. 1,
- Fig. 3: eine ähnliche Ansicht wie Fig. 2, jedoch nach axialem Abziehen des Kerns vom Stützkörper, mit einem zusätzlich die Drehbarkeit des Stützkörpers andeutendem Pfeil,

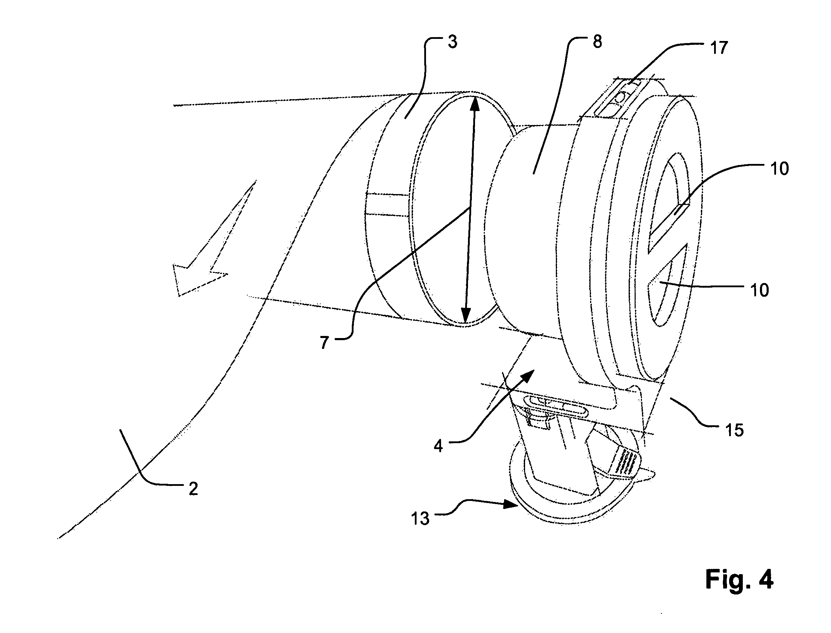

- Fig.4: eine ähnliche Ansicht wie Fig. 3, jedoch mit zusätzlich seitlich außen eingezeichneten Griffmulden zum manuellen Verdrehen des Stützkörpers und mit zusätzlich eingezeichneter, auf dem Kern gehaltener Folie, die nach Aufschieben des Kerns auf die Stützkörper gegenüber den fest gehaltenen Halteeinrichtungen abziehbar ist.

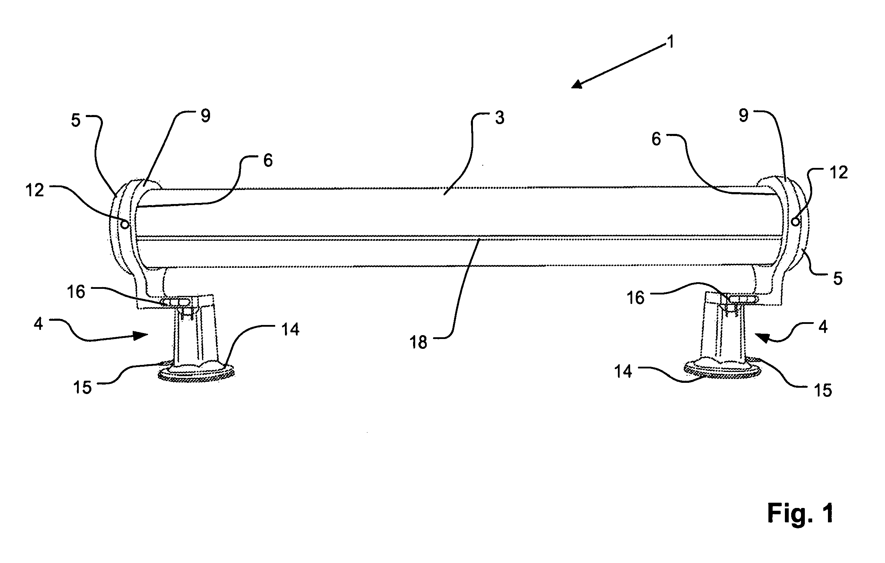

Die in Figur 1 schematisch dargestellte und insgesamt mit 1 bezeichnete Montagehilfe dient einerseits zur Anbringung der Applikationsfolie auf den sich auf der Trägerfolie befindlichen ausgeschnittenen Elementen im Rahmen der Vorbereitungsarbeiten und andererseits zur Anbringung von Folien 2, insbesondere Werbe- Tönungs- oder Dekorationsfolien, auf flächigen Substraten, wie etwa Scheiben. Die Verwendung solcher Folien, zum Beispiel PVC-Folien, ist üblicherweise auf Schaufensterscheiben, aber auch auf Autoscheiben oder an anderen mobilen Einheiten anzutreffen.

Die Folie 2 ist in der Regel mehrlagig ausgebildet und umfasst hier eine dem Schutz beim Transport dienende Trägerfolie sowie eine selbstklebende Folie, die auch noch einmal mehrlagig ausgebildet sein und zum Beispiel eine Lage mit dem eigentlichen Dekor oder der Schrift, u. U. in spiegelverkehrter Anordnung, und eine diese abdeckende Applikationsfolie umfassen kann.

Zur Vorbereitung der Montagehilfe 1 wird zunächst die fertig gestellte - also insbesondere geplottete und geschnittene und mit Applikationsfolie abgedeckte - Folie 2 auf einen Kern 3 aufgerollt, der üblicherweise als Papphülse ausgebildet ist und einen Innendurchmesser von etwa 70 bis 80 Millimeter aufweist. Um zu vermeiden, dass die Folie 2 auf den Kern 3 schief aufgerollt wird, ist auf der Oberfläche des Kerns 3 erfindungsgemäß eine optische Markierung 18 vorgesehen, an der der Rand der Folie 2 beim Aufwickeln ausgerichtet werden kann. Die optische Markierung 18 verläuft parallel zur Längsachse des Kerns 3.

Es ist auch möglich, auf dem Kern 3 mehrere Folienrollen nebeneinander aufzuwickeln (nicht dargestellt). Hierfür können zwischen den einzelnen Folienrollen Abstandhalter von einigen Zentimetern Breite vorgesehen sein. Die mehrere Folienrollen können dann gleichzeitig und parallel abgerollt und auf ein Substrat aufgebracht werden. Eine Längenskala kann auf dem Kern 3 aufgezeichnet oder aufgeklebt sein. Die Folie 2 muss dann nicht randbündig aufgezogen werden, sondern kann auch in einem definierten Abstand vom Rand, entsprechend dem später gewünschten Randabstand auf dem Substrat, aufgewickelt werden.

Zu ihrem Aufkleben wird die Folie 2 von dem Kern 3 abgewickelt. Um dies komfortabel und durch nur eine einzige Arbeitskraft zu ermöglichen, umfasst die Montagehilfe 1 zwei gegenüber dem Substrat mittelbar oder unmittelbar ortsfest abstützbare Halterungseinrichtungen 4. Diese befinden sich in montierter Stellung an den axialen Enden 6 des Kerns 3, der fest mit drehbaren Bereichen 5, nämlich hier in den Kern 3 über Stutzen 8 eingreifenden Stützkörpern 5, verbunden ist. Dadurch ist der Kern 3 gegenüber den Halterungseinrichtungen 4 drehbar, und zwar um seine Längsachse.

In montierter Stellung erstrecken sich die Stützkörper 5 axial und parallel zum aufgesteckten Kern 3, in den sie eingreifen. Die hier rundsymmetrischen Stützkörper 5 verjüngen in ihren Stutzen 8 bezüglich der axialen Erstreckung des Kerns 3 konisch und können so unterschiedliche Innendurchmesser 7 des als Hohlzylinders ausgebildeten Kerns 3 berücksichtigen und diesen in jedem Fall sicher halten. Der Kern 3 kann daher je nach Innendurchmesser 7 mit seinen axialen Enden 6 unterschiedlich weit auf die axial erstreckten Stützkörper 5 aufgeschoben werden - so weit, bis er festen Halt hat.

Dadurch kann die Breite einer Montageeinrichtung 1 je nach Breite des Kerns 3, aber auch je nach seinem Innendurchmesser 7 variieren.

Aufgrund der unabhängig voneinander zu plazierenden Halterungseinrichtungen 4 ist diese Variation der Breite unschädlich. Es müssen daher keine hohen Anforderungen an die Maßgenauigkeit des Kerns 3, der in der Regel eine Papphülse bildet, gestellt werden. Diese kann auch vor Ort und auch ohne eine glatte Schnittkante abgelängt werden.

An Stelle der konisch verjüngenden Stützkörper 5 können beispielsweise auch solche mit radial ausgreifenden Federbügeln oder abgestufte Stützkörper oder andere Möglichkeiten der Anpassung an Toleranzen des Innendurchmessers 7 des Kerns 3 vorgesehen sein.

Gemäß dem gezeichneten Ausführungsbeispiel umfassen die Halterungseinrichtungen 4 jeweils eine offene oder hier geschlossene Ringhalteng 9, in denen die Stützkörper 5 drehbar gehalten sind. Die Ringhalterung 9 ist selbst im Betrieb ortsfest gegenüber dem Substrat, auf das die Folie 2 aufgeklebt wird, gehalten. Die Lagerung der demgegenüber drehbaren Stützkörper 5 ist hier als reines Gleitlager ausgebildet, was nicht zwingend, jedoch sehr kostengünstig ist.

Dabei sind die Stützkörper 5 nicht allein durch Zug an der Folie 2 und dem Kern 3 drehbar, sondern sie können auch über von außen zugängliche Griffbereiche 10 manuell gedreht werden, insbesondere um einen zu weit abgerollten Abschnitt der Folie 2 wieder zurückdrehen zu können. Anstelle der Griffbereiche 10 ist auch eine Kurbel oder ähnliches möglich.

Um ein zu weites und/oder zu schnelles Abrollen der Folie 2 während ihres Aufbringens auf die Scheibe oder ein ähnliches Substrat zu verhindern, ist zusätzlich hier in jeder Halterungseinrichtung 4 zumindest eine Brems- oder Blockadevorrichtung 11 für eine Hemmung der Drehbewegung der Stützkörper 5 gegenüber den Ringhalterungen 9 vorgesehen.

Hier umfasst die Brems- oder Blockadevorrichtung 11 eine Stellschraube 12, die lotrecht in den Umfang der Ringhalterung 9 eingedreht wird und mit ihrer eingedrehten Spitze (hier abgestumpft) auf die darin gehaltene Gleitfläche des Stützkörpers 5 trifft, so dass dessen Drehgeschwindigkeit gegenüber der Ringhalterung 9 begrenzt wird. Je nach Ein- oder Ausdrehen der Stellschraube 12 kann daher die Bremskraft eingestellt werden. Auch ein Nachziehen zum Ausgleich eines eingetretenen Verschleißes ist möglich.

Auch eine andere Bremseinrichtung, etwa durch schleifende Federbügel oder ähnliches, ist möglich.

Im vorgestellten Ausführungsbeispiel sind die beiden Halterungseinrichtungen 4vollständig gleichartig und daher gegeneinander austauschbar. Ein Monteur erfährt dadurch eine erhebliche Montageerleichterung und -beschleunigung. Eine Fehlmontage ist ausgeschlossen.

Die Halterungseinrichtungen 4 können zudem konstruktiv einfach und prelsgünstig ebenso wie die Stellschraube 12 aus Kunststoff hergestellt sein. Dabei sind ein erster, die Ringhalterung 9 umfassender, und ein zweiter, den Stützkörper 5 umfassender Kunststoffkörper beispielsweise jeweils als Spritzgussteil ausgebildet.

Bei der Herstellung der jeweiligen Halterungseinrichtung 4 wird dann der Stützkörper 5 von axial außen in die Ringhalterung 9 eingesteckt und gegen ein axiales Herausziehen gesichert. Diese Sicherung kann zum Beispiel durch Aufschweißen einer über den Umfang laufenden Stufe erfolgen, die ein anschließendes Rückziehen des Stützkörpers 5 aus der Ringhalterung 9 blockiert.

Für einen leicht handelbaren Betrieb der Montagehilfe 1 ist jeder Halterungseinrichtung 4 zumindest ein Befestigungsmittel 13 zur mittelbaren oder unmittelbaren Halterung an dem Substrat 3 zugeordnet. Hier ist genau ein Saugnapf 14 als Befestigungsmittel 13 vorgesehen, der über einen Schalter 15 angezogen oder gelöst werden kann. Über diese Befestigungsmittel 13 sind die Halterungseinrichtungen 4 direkt auf dem Substrat festlegbar, so dass von einer so festgelegten Montagehilfe 1 die Folie 2 im Ein-Mann-Betrieb einfach abrollbar und auf das Substrat aufklebbar ist.

Um die Ausrichtung der Montagehilfe 1 über die Festlegung der beiden endseitigen Halterungseinrichtungen 4 ebenfalls im Ein-Mann-Betrieb zu erleichtern, umfassen diese jeweils zumindest eine Ausrichtungshilfe 16, 17 zur exakten horizontalen und/oder vertikalen Ausrichtung gegenüber dem Substrat. Hier sind an jeder Halterungseinrichtung 4 zwei Wasserwaagen 16 für die Ausrichtung bezüglich der Horizontalen und eine Wasserwaage 17 für die Ausrichtung gegenüber der Vertikalen vorgesehen, um die Halteeinrichtungen 4 zwischen links und rechts beliebig wechseln zu können.

Auch eine Ausrichtung mit einer eingebauten Laserunterstützung ist möglich. Beispielsweise kann damit auch ein Abstand zu einem linken und einem rechten Scheibenrand ausgemessen werden, so dass die Folie 2 exakt mittig auf die Scheibe aufgebracht werden kann. Ebenso kann eine Abstandsmessung nach oben oder unten für einen Beginn des oberen Folienrandes an exakt vorgegebener Position auf der Scheibe vorgenommen werden. Die Folie 2 muß im montierten Zustand weder an einem Seitenrand noch an einem oberen Rand beginnen.

Eine solche Halterungseinrichtung 4, die eine Ringaufnahme 9 umfasst, in der ein Stützkörper 5 drehbar und axial gesichert halterbar ist, wobei der Stützkörper 5 zur kraft- oder formschlüssigen Abstützung einer Rolle 3 ausgebildet und die Drehbarkeit des Stützkörpers 5 gegenüber der Ringaufnahme 9 durch eine Brems- oder Blockadeeinrichtung 11 beeinflussbar ist, ist gesondert handelbar, auch als Ersatzteil für eine solche Montageeinrichtung 1. Da der Kern 3 in aller Regel mit der Folie 2 mitgeliefert wird, genügt es, als Montagehilfe zwei solcher Halteeinrichtungen 4 vorzusehen, die dann erste über den Kern 3 miteinander verbunden werden.

Im Betrieb können die Halterungseinrichtungen 4 einzeln ausgerichtet und lösbar befestigt werden, so dass dieses von einer Person durchgeführt werden kann, auch bei größeren Folienbreiten von zum Beispiel mehr als einem Meter.

Auch das durch die Bremseinrichtung 11 gehemmte Abrollen des Kerns 3 mit der Folie 2 und deren Aufkleben auf dem Substrat kann einfach von einer Person durchgeführt werden. Die Abrollbewegung kann jederzeit unterbrochen werden, so dass dann ein aufgeklebter Bereich der Folie 2 zunächst glatt gestrichen werden kann, ehe ein weiterer Bereich abgerollt und aufgeklebt wird. Dabei wird jeweils nur so viel Folie 2 abgerollt, dass sichergestellt ist, dass diese problemlos ohne Faltenbildung verarbeitet werden kann.

Zum exakten Abtrennen einer zu langen Folie kann zwischen den Halterungseinrichtungen 4 parallel zum Kern 3 auch eine Schneideinrichtung, beispielsweise als eingreifbare Messerrolle, zugeordnet sein.

Für viele Anwendungen kann die Folie 2 auch randbündig auf einem Substrat angebracht werden.

Dieses wird dadurch ermöglicht, dass der Kern 3 über seine gesamte Länge zwischen den seitlichen Halterungseinrichtungen 4 von der Folie 2 umwickelbar ist.

Mit der Erfindung ist nicht nur eine Verlegung von oben nach unten im Einmannbetrieb möglich, sondern aufgrund der zweiten Ausrichtungshilfe 17 ebenso mit vertikal gestelltem Kern 3 in horizontaler Richtung.

## Patentansprüche

1. Montagehilfe (1) zur Anbringung von Folien (2), insbesondere Werbe- oder Dekorationsfolien, auf flächigen Substraten, wie etwa Scheiben, wobei die Folie (2) von einem Kern (3) abwickelbar ist,
**dadurch gekennzeichnet,**
**dass** die Montagehilfe (1) zwei ortsfest abstützbare Halterungseinrichtungen (4) zur Halterung des Kerns (3) gegenüber dem Substrat umfasst, wobei der Kern (3) gegenüber den Halterungseinrichtungen (4) drehbar ist

2. Montagehilfe (1) nach Anspruch 1,
**dadurch gekennzeichnet,**
**dass** die Halterungseinrichtungen (4) jeweils einen axial und parallel zum Kern (3) erstreckten Stützkörper (5) umfassen, an denen der Kern (3) drehbeweglich gehalten ist.

3. Montagehilfe (1) nach Anspruch 2,
**dadurch gekennzeichnet,**
**dass** der Kern (3) als Hohlzylinder ausgebildet und mit seinen axialen Enden (6) auf die axial erstreckten Stützkörper (5) aufsteckbar ist.

4. Montagehilfe (1) nach einem der Ansprüche 2 oder 3,
**dadurch gekennzeichnet,**
**dass** die Halterungseinrichtungen (4) jeweils eine Ringhafterung (9) umfassen, in denen die Stützkörper (5) drehbar gehalten sind.

5. Montagehilfe (1) nach einem der Ansprüche 2 bis 4,
**dadurch gekennzeichnet,**
**dass** die Stützkörper (5) zum Aufwickeln der Folie (2) auf den Kern (3) über von außen zugängliche Griffbereiche (10) manuell drehbar sind.

6. Montagehilfe (1) nach einem der Ansprüche 4 oder 5,
**dadurch gekennzeichnet,**
**dass** eine Brems- oder Blockadevorrichtung (11) für eine Hemmung der Drehbewegung der Stützkörper (5) gegenüber den Ringhalterungen (9) vorgesehen ist.

7. Montagehilfe (1) nach Anspruch 6,
**dadurch gekennzeichnet,**
**dass** die Brems- oder Blockadevorrichtung (11) für eine Hemmung der Drehbewegung einstell- und nachstellbar ist.

8. Montagehilfe (1) nach einem der Ansprüche 1 bis 7,
**dadurch gekennzeichnet,**
**dass** die Halterungseinrichtungen (4) gleichartig und austauschbar ausgebildet sind.

9. Montagehilfe (1) nach einem der Ansprüche 2 bis 8,
**dadurch gekennzeichnet,**
**dass** die Halterungseinrichtungen einen ersten, die Ringhalterung (9) umfassenden, und einen zweiten, den Stützkörper (5) umfassenden Kunststoffkörper ausbilden.

10. Montagehilfe (1) nach einem der Ansprüche 2 bis 9,
**dadurch gekennzeichnet,**
**dass** der Stützkörper (5) bei der Montage von axial außen in die Ringhalterung (9) eingesteckt und gegen ein axiales Herausziehen gesichert ist.

11. Montagehilfe (1) nach einem der Ansprüche 1 bis 10,
**dadurch gekennzeichnet,**
**dass** jeder Halterungseinrichtung (4) zumindest ein Befestigungsmittel (13) zur mittelbaren oder unmittelbaren Halterung an dem Substrat zugeordnet ist.

12. Montagehilfe (1) nach einem der Ansprüche 2 bis 11,
**dadurch gekennzeichnet,**
**dass** dem Stützkörper (5) zumindest eine Ausrichtungshilfe (16;17) zur exakten horizontalen und/oder vertikalen Ausrichtung gegenüber dem Substrat zugeordnet ist.

13. Montagehilfe (1) nach einem der Ansprüche 11 oder 12,
**dadurch gekennzeichnet,**
**dass** die Befestigungsmittel (13) direkt auf dem Substrat festlegbar sind.

14. Montagehilfe (1) nach Anspruch 13,
**dadurch gekennzeichnet,**
**dass** die Befestigungsmittel (13) durch Saugnäpfe gebildet sind.

15. Halterungseinrichtung (4) für eine Montagehilfe (1) nach einem der Ansprüche 1 bis 14, wobei die Halterungseinrichtung (4) eine Ringaufnahme (9) umfasst, in der ein Stützkörper (5) drehbar und axial gesichert halterbar ist, wobei der Stützkörper (5) zur kraft- oder formschlüssigen Abstützung einer Rolle (3) ausgebildet und die Drehbarkeit des Stützkörpers (5) gegenüber der Ringaufnahme (9) durch eine Brems- oder Blockadeeinrichtung (11) beeinflussbar ist.

## Claims

1. A mounting aid (1) for mounting films (2), in particular advertising or decorative films on planar substrates, e.g. windows, by unwinding the film (2) from a core (3), **characterized in that** the mounting aid (1) comprises two stationarily supportable fixing devices (4) for fixing a core (3) relative to a substrate with the core (3) being rotatable relative to the fixing devices (4).

2. The mounting aid (1) according to claim 1, **characterized in that** the fixing devices (4) each comprise a support element (5) extending axially and parallel to the core (3) on which the core (3) is rotatably held.

3. The mounting aid (1) according to claim 2, **characterized in that** the core (3) is designed as a hollow cylinder and its axial ends (6) can be slipped over the axially extending support elements (5).

4. The mounting aid (1) according to claim 2 or 3, **characterized in that** the fixing devices (4) each have a ring retainer (9) in which the support elements (5) are rotatably held.

5. The mounting aid (1) according to any one of claims 2 to 4, **characterized in that** the support elements (5) are manually rotatable via externally accessible grips (10) to wind the film (2) on the core (3).

6. The mounting aid (1) according to claim 4 or 5, **characterized in that** a brake or locking mechanism (11) is provided to restrict the rotary motion of the support elements (5) relative to the ring retainers (9).

7. The mounting aid (1) according to claim 6, **characterized in that** the brake or locking mechanism (11) to restrict the rotary motion is adjustable.

8. The mounting aid (1) according to any one of claims 1 to 7, **characterized in that** the fixing devices (4) are identical and interchangeable.

9. The mounting aid (1) according to any one of claims 2 to 8, **characterized in that** the fixing devices (4) consist of a first plastic component forming the ring retainer (9) and a second plastic component forming the support element (5).

10. The mounting aid (1) according to any one of claims 2 to 9, **characterized In that** in operation the support element (5) is inserted into the ring retainer (9) from the axial outside and secured against axial extraction.

11. The mounting aid (1) according to any one of claims 1 to 10, **characterized In that** each fixing device (4) is equipped with at least one fixing element (13) for direct or indirect attachment to the substrate.

12. The mounting aid (1) according to any one of claims 2 to 11, **characterized in that** the support elements (5) are provided with at least one adjustment aid (16, 17) for proper horizontal and/or vertical placement relative to the substrate.

13. The mounting aid (1) according to claim 11 or 12, **characterized in that** the fixing elements (13) can be directly affixed to the substrate.

14. The mounting aid (1) according to claim 13, **characterized in that** the fixing elements (13) comprise suction cups.

15. Fixing devices (4) for a mounting aid (1) according to any one of claims 1 to 14, wherein said fixing device (4) comprises a ring retainer (9) in which a support element (5) is rotatably held and axially secured, whereby said support element (5) is designed to provide non-positive and form-locking support for a core (3) and the rotatability of the support element (5) relative to the ring retainer (9) is adjustable via a brake or locking mechanism (11).

## Revendications

1. Accessoire de montage (1) pour la fixation de feuilles (2), en particulier des feuilles promotionnelles ou décoratives sur des substrats plats, tels que des vitres, dans lequel la feuille (2) est déroulable d'un noyau (3), **caractérisé en ce que** l'aide au montage (1) comporte deux dispositifs de maintien (4) aptes à être appuyés sur un point fixe pour supporter le noyau (3) par rapport au substrat, le noyau (3) étant mobile en rotation par rapport au dispositif de maintien (4).

2. Accessoire de montage (1) selon la revendication 1, **caractérisé en ce que** les dispositifs de maintien (4) comprennent chacun un support (5) s'étendant axialement et parallèle au noyau (3) sur lequel le noyau (3) est maintenu mobile en rotation.

3. Accessoire de montage (1) selon la revendication 2, **caractérisé en ce que** le noyau (3) est agencé sous la forme d'un cylindre creux, et enfichable par ses extrémités axiales (6) au support (5) s'étendant axialement.

4. Accessoire de montage (1) selon l'une des revendications 2 ou 3, **caractérisé en ce que** les dispositifs de maintien (4) comprennent chacun un anneau support (9), dans lequel les support (5) sont maintenus mobiles en rotation.

5. Accessoire de montage (1) selon l'une quelconque des revendications 2 à 4, **caractérisé en ce que** le support (5) sont à rotation manuelle par l'intermédiaire de poignées (10) accessibles de l'extérieur, pour enrouler la feuille (2) sur le noyau (3).

6. Accessoire de montage (1) selon l'une quelconque des revendications 4 ou 5, **caractérisé en ce qu'**un dispositif de freinage ou de blocage (11) est prévu pour empêcher la rotation du support (5) par rapport à l'anneau de fixation (9).

7. Accessoire de montage (1) selon la revendication 6, **caractérisé en ce que** le dispositif de freinage ou de blocage (11) pour inhiber le mouvement de rotation est réglable et réajustable.

8. Accessoire de montage (1) selon l'une quelconque des revendications 1 à 7, **caractérisé en ce que** les dispositifs de maintien (4) sont conçus semblables et interchangeables.

9. Accessoire de montage (1) selon l'une quelconque des revendications 2 à 8, **caractérisé en ce que** les dispositifs de maintien (4) comprennent un premier le support en plastique entourant l'anneau de fixation (9) et un second support en plastique entourant le support (5).

10. Accessoire de montage (1) selon l'une quelconque des revendications 2 à 9, **caractérisé en ce que** le support (5) inséré axialement de l'extérieur dans le support annulaire (9) lors de l'assemblage et est assuré contre le retrait axial.

11. Aide montage (1) selon l'une quelconque des revendications 1 à 10, **caractérisé en ce qu'**à chaque dispositif de maintien (4) est associé au moins un moyen de fixation (13) pour la fixation directe ou indirecte sur le substrat.

12. Accessoire de montage (1) selon l'une quelconque des revendications 2 à 11, **caractérisé en ce qu'**au support (5) est associé au moins un accessoire d'alignement (16, 17) pour l'alignement horizontale et/ou vertical précis par rapport au substrat.

13. Accessoire de montage (1) selon l'une quelconque des revendications 11 ou 12, **caractérisé en ce que** les moyens de fixation (13) sont directement fixables sur le substrat.

14. Accessoire de montage (1) selon la revendication 13, **caractérisé en ce que** les moyens de fixation (13) sont formés par des ventouses.

15. Dispositif de maintien (4) pour un accessoire de montage (1) selon l'une quelconque des revendications 1 à 14, dans lequel le dispositif de maintien (4) comprend un support annulaire (9) dans lequel un support (5) peut être disposé mobile en rotation et assuré axialement, le support (5 ) étant agencé comme un support adaptable par sa forme et supportant le poids, d'un rouleau (3) et la rotation du support (5) par rapport au support annulaire (9) peut être influencée par un dispositif de freinage ou de blocage (11).
